# EUROPÄISCHE PATENTANMELDUNG

(11) **EP 0 896 812 A1**
(43) Veröffentlichungstag der Anmeldung: **17.02.1999**
(21) Anmeldenummer: 98110631.3
(22) Anmeldetag: 10.06.1998
(51) Int. Cl.: A61C 8/00

(54) **Implantateinsatz zum Fördern des Wachstums der Gingiva**

(30) Priorität: 13.08.1997 DE 19735138; 13.08.1997 DE 19735117; 25.09.1997 DE 19742382
(71) Anmelder: IMZ-Fertigungs- und Vertriebsgesellschaft für dentale Technologie mbH, 70794 Filderstadt (DE)
(72) Erfinder: Kirsch, Axel, Dr., 70184 Stuttgart (DE); Scherberger, Rolf, 75217 Birkenfeld (DE); Dürr, Walter, 75196 Remchingen (DE)
(74) Vertreter: Goddar, Heinz J., Dr.

(57) **Zusammenfassung**

Die Erfindung betrifft einen Einsatz für ein enossales Implantat zum Fördern des Wachstums der Gingiva nach dem Einsetzen eines Implantat-Grundkörpers, welcher ein Zwischenstück mit einem zervikalen Ende zum Einsetzen in den Grundkörper, eine Kappe am koronalen Ende des Zwischenstücks, eine Einrichtung zum Verhindern einer Relativbewegung der Kappe in Richtung zu dem zervikalen Ende des Zwischenstücks hin bei Einwirkung einer im wesentlichen in Längsrichtung des Zwischenstücks wirkenden Kraft auf die Kappe sowie eine Verdrehsicherung zum Verhindern einer Drehbewegung der Kappe um die Längsachse des Zwischenstücks relativ zu demselben aufweist, wobei die Kappe so angeordnet ist, daß sie relativ zu dem Zwischenstück in Längsrichtung desselben zumindest in der Richtung zu dem koronalen Ende des Zwischenstücks hin bewegt werden kann, wobei die Verdrehsicherung bei einer solchen Bewegung eine Drehbewegung der Kappe relativ zu dem Zwischenstück um dessen Längsachse verhindert.

## Beschreibung

Die Erfindung betrifft einen Einsatz für ein enossales Implantat, insbesondere für ein im Kieferbereich anzubringendes Implantat zur Befestigung eines Zahnersatzes.

Nach Verlust eines Zahns kommt es häufig nicht nur zur Atrophie des ortsständigen Kieferknochens, sondern auch zu einer Veränderung der Kontur und des Volumens der Gingiva. Meist führt eine Narbenbildung zu einer Ausdünnung des subepithelialen Bindegewebes und einer Verschiebung der Grenze zwischen freier und befestigter Schleimhaut. Zusätzlicher Knochenverlust und der Verlust der blutzuführenden Arterie an den benachbarten Zähnen bedingt einen totalen oder teilweisen Verlust der dem Defekt zugewandten Zahnfleischpapille oder eine Verlagerung der Zahnfleischpapille zu der Zahnwurzelspitze hin. Diese und andere Konsequenzen des Verlustes eines oder mehrerer Zähne erschweren die funktionelle, insbesondere aber die kosmetische Wiederherstellung des Patienten mit einem implantatgestützten Zahnersatz. Neben der Wiederherstellung eines ausreichenden Knochenvolumens ist es für das optimale kosmetische Ergebnis von ausschlaggebender Bedeutung, die Zahnfleischpapillen der natürlichen Zähne, die dem durch den Zahnverlust bedingten Defekt benachbart sind, in ihrer ursprünglichen Lage zu rekonstruieren und gleichzeitig die Gingiva im Defektbereich in vertikaler und transversaler Richtung zu verdicken. Durch eine oder mehrere implantatgetragene Einzelkronen kann dann, ggf. ergänzt durch korrigierende chirurgische und/oder prothetische Maßnahmen ein kosmetisch und funktionell befriedigendes Ergebnis erzielt werden.

Es ist die Aufgabe der Erfindung, eine Vorrichtung zur Verfügung zu stellen, mit welcher sich das Gingivavolumen im Bereich eines oder mehrerer verlustig gegangener Zähne vergrößern läßt und gleichzeitig sich der Zahnfleischpapillenansatz der dem Defekt benachbarten Zähne zur Krone dieser Zähne hin verlagern läßt.

Erfindungsgemäß wird diese Aufgabe durch einen Einsatz für ein enossales Implantat zum Fördern des Wachstums der Gingiva nach dem Einsetzen eines Implantat-Grundkörpers, welcher ein ein- oder mehrteiliges Zwischenstück mit einem zervikalen Ende zum Einsetzen in den Grundkörper, eine Kappe am koronalen Ende des Zwischenstücks, eine Einrichtung zum Verhindern einer Relativbewegung der Kappe in Richtung zu dem zervikalen Ende des Zwischenstücks hin bei Einwirkung einer im wesentlichen in Längsrichtung des Zwischenstücks wirkenden Kraft auf die Kappe, sowie eine Verdrehsicherung zum Verhindern einer Drehbewegung der Kappe um die Längsachse des Zwischenstücks relativ zu demselben aufweist, wobei die Kappe so angeordnet ist, daß sie relativ zu dem Zwischenstück in Längsrichtung desselben in der Richtung zu dem koronalen Ende des Zwischenstücks hin bewegt werden kann, wobei die Verdrehsicherung eine Drehbewegung der Kappe relativ zu dem Zwischenstück um dessen Längsachse verhindert, gelöst.

Der Schutzumfang soll sich allerdings, insoweit ein derartiger Einsatz beansprucht wird, nicht auf einen - an sich möglichen - Einsatz erstrecken, welcher aufweist:
einen zervikalen Zentrierbund, der in eine hohlzylindrische Ringausnehmung am koronalen Ende eines Grundkörpers einsetzbar ist und eine an den Zentrierbund in koronaler Richtung anschließende, auf einen koronalen Stirnrand eines Grundkörpers aufsetzbare Schulter aufweist,
mindestens ein Formschlußelement zum verdrehgesicherten Verbinden mit einem Grundkörper über (ein) komplementäre(s) Formschlußelement(e) des Grundkörpers, welches zervikal im Anschluß an die Schulter des Einsatzes an der zylindrischen Außenwand des Zentrierbundes in einem Formschlußabschnitt desselben vorgesehen ist,
einen sich an den Formschlußabschnitt zervikal anschließenden zylindrischen Führungsabschnitt, dessen Außendurchmesser im wesentlichen dem Durchmesser einer Zylinderfläche entspricht, auf der die radial am nächsten zur Längsmittelachse des Zentrierbundes liegende(n) Umfangsfläche(n) des Formschlußabschnitts liegt/liegen,
einen an den Führungsabschnitt zervikal anschließenden zylinderförmigen Zentrierabschnitt, dessen Außendurchmesser kleiner als der Außendurchmesser des Führungsabschnitts ist.

Diese ausgenommene Ausgestaltung entspricht der Ausgestaltung der Distanzhülse gemaß dem deutschen Patent 195 34 979, auf welches zum besseren Verständnis verwiesen wird.

Die Verdrehsicherung kann erfindungsgemäß sowohl kraftschlüssig, z.B. durch Klemmelemente, als auch formschlüssig ausgebildet sein.

Die Erfindung kann eine Einrichtung zum Befestigen eines Betätigungswerkzeuges, beispielsweise eines Hebels oder eines Schraubendrehers, an dem zervikalen Ende der Kappe vorsehen.

Erfindungsgemäß kann vorgesehen sein, daß die Kappe mit dem Zwischenstück über eine Rastverbindung verbunden ist, wobei Rastzungen des einen Teils in Rastzacken des anderen Teils eingreifen, welche in einer im wesentlichen in Längsrichtung des Zwischenstücks verlaufenden Reihe angeordnet sind. Die Rastverbindung kann dabei im wesentlichen eine einseitige Sperrwirkung in Richtung zu dem zervikalen Ende des Zwischenstücks aufweisen.

Insbesondere kann dabei vorgesehen sein, daß an der Kappe oder an dem Zwischenstück zwei einander diametral gegenüberliegende, im wesentlichen in Längsrichtung des Zwischenstücks verlaufende Reihen von Rastzacken vorgesehen sind.

Dabei kann ein am zervikalen Ende der Kappe lösbar angebrachter Hebel zum Erzeugen einer Kippbewegung der Kappe um eine Achse im wesentlichen senkrecht zu der Längsachse des Zwischenstücks vorgesehen sein. Vorzugsweise ist dabei der Hebel in eine Öffnung der Kappe eingeschraubt.

Weiterhin kann vorgesehen sein, daß eine Schraube oder ein Stift die Kappe und/oder das Zwischenstück zumindest teilweise durchsetzt, wobei die Kappe an der Schraube und die Schraube an dem Zwischenstück abgestützt ist bzw. abgestützt werden kann und wobei eine vorzugsweise formschlüssige Verdrehsicherung zur Sicherung der Kappe gegen eine Drehbewegung relativ zu dem Zwischenstück vorhanden ist.

Dabei kann vorgesehen sein, daß die Schraube in ein Innengewinde des Zwischenstücks eingreift und eine Anschlagfläche aufweist, welche durch Betätigen der Schraube in Anschlag mit dem zervikalen Ende eines sich in das Innere des Zwischenstücks hinein erstreckenden Teils der Kappe gebracht werden kann.

Erfindungsgemäß kann die Kappe mit dem Zwischenstück über eine lineare Führung verbunden sein, welche eine lineare Relativbewegung im wesentlichen in Längsrichtung des Zwischenstücks gestattet.

Die Führung kann einen in Längsrichtung verlaufenden Schlitz in der Außenwand des Zwischenstücks sowie ein mit der Kappe fest oder lösbar verbundenes Sicherungselement aufweisen, welches durch den Schlitz hindurchgreift und in dem Schlitz geführt ist. Das Sicherungselement kann dabei einstückig mit der Kappe ausgeführt sein oder ein separates Element bilden, welches in eine Aussparung der Kappe eingeführt wird, wobei hierbei die Außenkontur des Sicherungselements an diejenige der Kappe angepaßt sein kann.

Erfindungsgemäß kann die Außenwand des Zwischenstücks einen Schlitz aufweisen und eine sich zumindest teilweise in dem Inneren des Zwischenstücks erstreckende Zunge der Kappe, die elastisch ausgebildet sein kann, sich in den Schlitz hinein erstrecken. Grundsätzlich kann eine solche Zunge aber auch derart vorgesehen sein, daß sie sich von außen in den Schlitz hinein erstreckt.

Weiterhin kann vorgesehen sein, daß die Schraube mit einem Innengewinde der Kappe verbunden ist und an einem in dem Innenraum des Zwischenstücks befindlichen Anschlagelement abgestützt werden kann.

Es kann weiterhin vorgesehen sein, daß die Kappe an ihrem koronalen Ende eine im wesentlichen senkrecht zur Längsachse des Zwischenstücks verlaufende Auflagefläche für Gingivagewebe aufweist. Die Kappe kann auf der koronalen Stirnseite eine Bohrung aufweisen, welche zum Anbringen von Montage- oder Betätigungswerkzeugen oder zum Hindurchführen von Werkzeugen, beispielsweise von Schraubendrehern zum Anziehen einer Befestigungs- oder Stellschraube, eingerichtet sein kann.

Die Kappe besteht vorzugsweise ganz oder im wesentlichen aus Titan. Grundsätzlich kann auch ein anderes biokompatibles Material, insbesondere auch Keramik, verwendet werden. In einer vorteilhaften Ausführungsform kann die Kappe mit einer rauhen Oberflächenstruktur ausgebildet sein, welche ein Anhaften des Bindegewebes der Gingiva an der Kappe bewirkt oder begünstigt, was z.B. durch eine geeignete Beschichtung, etwa eine Titanplasmabeschichtung, oder durch eine geätzte und/oder gestrahlte Oberfläche erreicht werden kann.

Weiterhin kann auf der Oberfläche der Kappe ein Fibrinkleber oder ein anderes Haftmittel und/oder ein das Wachstum des Bindegewebes fördorndes Protein aufgebracht sein, z.B. in Form einer geeigneten Beschichtung.

Um ein besseres Anhaften der Gingiva an der Kappe zu ermöglichen, kann erfindungsgemäß weiterhin vorgesehen sein, daß an dem koronalen Ende der Kappe seitlich über den Umfang des Zwischenstücks hinaus vorstehende Haftflächen, vorzugsweise aus einem resorbierbaren Material, z.B. aus Kollagen oder einem resorbierbaren Polymer, vorgesehen sind, die zumindest auf ihrer koronalen Seite für einen Haftkontakt mit dem Gingivagewebe ausgebildet sind. Diese Haftflächen können auf einem Vorsprung der Kappe aufliegen und in bekannter Weise durch einen - beispielsweise aufgeschraubten - Sicherungsring gesichert sein. Die Haftflächen können mit einem Haftmittel wie einem Fibrinkleber oder einer das Bindegewebswachstum fördernden Substanz, beispielsweise einem das Bindegewebswachstum fördernden Protein, getränkt sein. Mit Hilfe derartiger Haftflächen läßt sich eine Zugkraft auf das Gingivagewebe auch außerhalb der unmittelbaren Umgebung des Implantats aufbringen, so daß die Zugspannung großflächiger aufgebracht und damit auch ein großflächigeres Wachstum der Gingiva erzeugt werden kann. Bei einem Einsatz einer derartigen Kappe wird die Gingiva so vernäht, daß sie über der Kappe und den zugehörigen Haftflächen anliegt. Bei Verwendung eines resorbierbaren Materials für die Haftflächen werden diese nach einer gewissen Zeit verstoffwechselt. Im Bereich der die Haftung mit dem Bindegewebe fördernden Flächen kommt es zu einer bindegewebigen Verbindung mit der dem Nachbarzahn zugehörigen Papille, die somit mit Hilfe des Einsatzes, genauer durch ein Verschieben der Kappe in Richtung zu dem koronalen Ende des Zwischenstücks, zu der Krone des benachbarten Zahns hin verlagert werden kann.

Die Erfindung kann weiterhin vorsehen, daß das Zwischenstück zweiteilig mit einem Sicherungsring zum Einsetzen in den Implantat-Grundkörper sowie einem Basiselement zum Einsetzen in den Sicherungsring und zum Aufnehmen der Kappe ausgebildet ist, wobei der Sicherungsring eine kraftschlüssige Einrichtung zum Verhindern einer Drehbewegung relativ zu dem Implantat-Grundkörper aufweist und das Basiselement einen Abschnitt aufweist, der zum kraftschlüssigen Sichern des Basiselements gegen eine Drehbewegung um seine Längsachse gegenüber dem Sicherungsring eingerichtet ist.

Dabei kann insbesondere vorgesehen sein, daß das Basiselement mit einem Außengewinde zum Einschrauben in einen Implantat-Grundkörper versehen ist, der Sicherungsring zumindest abschnittsweise einen sich konisch zum zervikalen Ende hin verjüngenden Innendurchmesser aufweist und das Basiselement zumindest abschnittsweise einen sich konisch zum zervikalen Ende hin verjüngenden Außendurchmesser aufweist, derart, daß der Abschnitt des Basiselements mit einem sich konisch verjüngenden Außendurchmesser in dem Abschnitt des Sicherungsring mit einem sich konisch verjüngenden Innendurchmesser beim Einschrauben in den Grundkörper verspannt werden kann.

Erfindungsgemäß kann weiterhin vorgesehen sein, daß die Kappe eine form- oder kraftschlüssige Einrichtung zum Sichern der Kappe gegen ein unbeabsichtigtes Lösen von dem Zwischenstück beim Einsetzen des Einsatzes in den Implantat-Grundkörper aufweist, so daß die Kappe beim Einsetzen nicht verlorengehen kann. Dabei kann vorgesehen sein, daß die Kappe eine elastische Haltelasche aufweist, welche das Zwischenstück oder ein damit verbundenes Element beaufschlagt. Insbesondere kann die Haltelasche in eine Bohrung des Zwischenstücks eingreifen und eine Innenwand der Bohrung oder eine darin eingedrehte Schraube elastisch beaufschlagen, so daß eine ungewollte Bewegung der Kappe in Längsrichtung verhindert wird, aber eine kontrollierte Verschiebung in Längsrichtung möglich ist.

Die Erfindung stellt weiterhin eine Vorrichtung zum Fördern des Wachstums der Gingiva im Bereich der Implantationsstelle eines enossalen Implantats zur Verfügung, welche einen Grundkörper zur Verankerung im Knochengewebe sowie einen in dem Grundkörper angebrachten Einsatz zum Fördern des Wachstums der Gingiva aufweist. Insoweit eine solche Vorrichtung beansprucht wird, soll sich der Schutzumfang nicht auf eine Vorrichtung zum Fördern des Wachstums der Gingiva im Bereich der Implantationsstelle eines enossalen Implantats erstrecken, bei welcher der Grundkörper aufweist:
eine hohlzylindrische Ringausnehmung am koronalen Ende zur Aufnahme eines Zentrierbundes eines Einsatzes,
mindestens ein in Umfangsrichtung wirksames Formschlußelement an der Innenwandung der Ringausnehmung in einem Formschlußbereich derselben unmittelbar im Anschluß an den Stirnrand des Grundkörpers zum verdrehgesicherten Verbinden mit einem Einsatz,
einen sich an den Formschlußbereich des Grundkörpers zervikal anschließenden Führungsbereich der Ringausnehmung mit im wesentlichen glatter Umfangswandung, dessen Durchmesser dem Durchmesser einer Zylinderfläche entspricht, auf welcher (eine) der Längsmittelachse der Ringausnehmung nächstliegende(n) Führungsfläche(n) des Formschlußbereiches liegt/liegen, einen zervikal an den Führungsbereich der Ringausnehmung anschließenden Zentrierbereich der Ringausnehmung mit einem gegenüber dem Führungsbereich verringerten Durchmesser, und/oder
bei welcher das (ein- oder mehrteilige) Zwischenstück des Einsatzes zum Fördern des Wachstums der Gingiva aufweist:
einen zervikalen Zentrierbund, der in eine hohlzylindrische Ringausnehmung am koronalen Ende eines Grundkörpers einsetzbar ist und eine an den Zentrierbund in koronaler Richtung anschließende, auf einen koronalen Stirnrand eines Grundkörpers aufsetzbare Schulter aufweist,
mindestens ein Formschlußelement zum verdrehgesicherten Verbinden mit einem Grundkörper über (ein) komplementäre(s) Formschlußelement(e) des Grundkörpers, welches zervikal im Anschluß an die Schulter des Zwischenstücks an der zylindrischen Außenwand des Zentrierbundes in einem Formschlußabschnitt desselben vorgesehen ist,
einen sich an den Formschlußabschnitt zervikal anschließenden zylindrischen Führungsabschnitt, dessen Außendurchmesser im wesentlichen dem Durchmesser einer Zylinderfläche entspricht, auf der die radial am nächsten zur Längsmittelachse des Zentrierbundes liegende(n) Umfangsfläche(n) des Formschlußabschnittes liegt/liegen, wobei dieser Durchmesser ggf. im wesentlichen dem Durchmesser des Führungsbereiches des Grundkörpers entspricht,
einen an den Führungsabschnitt zervikal anschließenden zylinderförmigen Zentrierabschnitt, dessen Außendurchmesser kleiner als der Außendurchmesser des Führungsabschnitts ist und ggf. im wesentlichen mit dem Innendurchmesser des Zentrierbereichs des Grundkörpers übereinstimmt.

Diese ausgenommenen Ausgestaltungen des Grundkörpers bzw. des Einsatzes entsprechen der Ausgestaltung des Grundkörpers bzw. der Distanzhülse gemäß dem deutschen Patent 195 34 979, auf das zum besseren Verständnis verwiesen wird.

Bei der erfindungsgemäßen Lösung wird das physiologische Phänomen ausgenutzt, daß das Gingivagewebe durch das Aufbringen einer Zugspannung mobilisiert und daher durch den erfindungsgemäßen Einsatz an der Implantationsstelle entlang des Implantats "hochgezogen" werden kann. Ein kontrolliertes Wachstum der Gingiva kann dadurch erzeugt werden, daß die Kappe in kontrollierter Weise zu dem koronalen Ende des Zwischenstücks hochgeschoben wird, wobei eine Sperre eine Bewegung in die umgekehrte Richtung verhindert. Durch das Vorsehen einer Verdrehsicherung zwischen der Kappe und dem Zwischenstück wird vermieden, daß sich Gingivagewebe, welches an oder über der Kappe eingewachsen ist, bei einer Bewegung der Kappe ablöst.

Die Erfindung ermöglicht daher eine neue Art und Weise für die Behandlung einer Implantatstelle nach dem Einbringen eines Grundkörpers in einen Kieferknochen, welches die folgenden Schritte aufweist:
- Implantieren eines Grundkörpers in einen Kieferknochen,
- Einsetzen eines erfindungsgemäßen Einsatzes in den Grundkörper,
- Vernähen oder anderweitiges Verschließen des Gingivagewebes derart, daß es an und ggf. über dem Zwischenstück und der Kappe anliegt,
- Verheilenlassen der Gingiva,
- Aufbringen einer kontrollierten Zugspannung durch Bewegen der Kappe relativ zu dem Zwischenstück in Längsrichtung desselben.

Dabei kann der Schritt des Aufbringens einer Zugspannung je nach Bedarf und dem gewünschten Gingivavolumen wiederholt werden. Für das Bewegen der Kappe stehen je nach Ausführungsform der Erfindung verschiedene Möglichkeiten zur Verfügung, beispielsweise sukzessives Verkippen bei einer Rastverbindung zwischen der Kappe und dem Zwischenstück, Betätigen einer Stellschraube und dergleichen.

Die Begriffe "zervikal" und "koronal" sind im Zusammenhang dieser Beschreibung auf die Orientierung des Zwischenstücks bzw. der Kappe nach dem Einsetzen bei montierter Kappe zu verstehen. Der Begriff "Längsrichtung" bezieht sich auf eine durch das koronale und zervikale Ende laufende Achse.

Die Erfindung wird nachfolgend anhand der beigefügten Zeichnungen mit weiteren Einzelheiten näher erläutert.
- Fig. 1: zeigt eine teilweise in Längsrichtung geschnittene Ansicht eines Zwischenstücks eines erfindungsgemäßen Einsatzes.
- Fig. 2a: zeigt eine Schnittansicht der Kappe eines erfindungsgemäßen Einsatzes.
- Fig. 2b: zeigt eine Seitenansicht des Einsatzes gemäß Fig. 2a.
- Fig. 3: zeigt in einem Längsschnitt einen erfindungsgemäßen Einsatz gemäß der ersten Ausführungsform mit montierter Kappe.
- Fig. 4: zeigt in einem teilweisen Längsschnitt den Einsatz nach einer Verschiebung der Kappe zu dem koronalen Ende hin zusammen mit einem Betätigungswerkzeug.
- Fig. 5: zeigt eine Seitenansicht eines weiteren erfindungsgemäßen Einsatzes mit einer eingesetzten Befestigungsschraube zum Verankern des Einsatzes in dem Grundkörper des Implantats.
- Fig. 6: zeigt eine Schnittansicht des Einsatzes gemäß Fig. 5 sowie eine zugehörige Draufsicht auf sein koronales Ende.
- Fig. 7: zeigt eine Schnittansicht eines Implantat-Grundkörpers mit einem darin montiertem Einsatz gemäß der Ausführungsform der Fig. 5 und 6.
- Fig. 8: zeigt eine Seitenansicht eines erfindungsgemäßen Zwischenstücks gemäß einer dritten Ausführungsform der Erfindung.
- Fig. 9: zeigt eine Schnittansicht des in Fig. 8 dargestellten Zwischenstücks.
- Fig. 10a: zeigt in einem teilweisen Längsschnitt einen Einsatz gemäß der dritten Ausführungsform in der Grundstellung.
- Fig. 10b: zeigt in einem teilweisen Längsschnitt einen Einsatz gemäß der dritten Ausführungsform der Erfindung nach einer Verschiebung der Kappe in Längsrichtung.
- Fig. 11: zeigt in einem teilweisen Längsschnitt einen Einsatz gemäß der dritten Ausführungsform der Erfindung nach einer Verschiebung der Kappe in Längsrichtung.

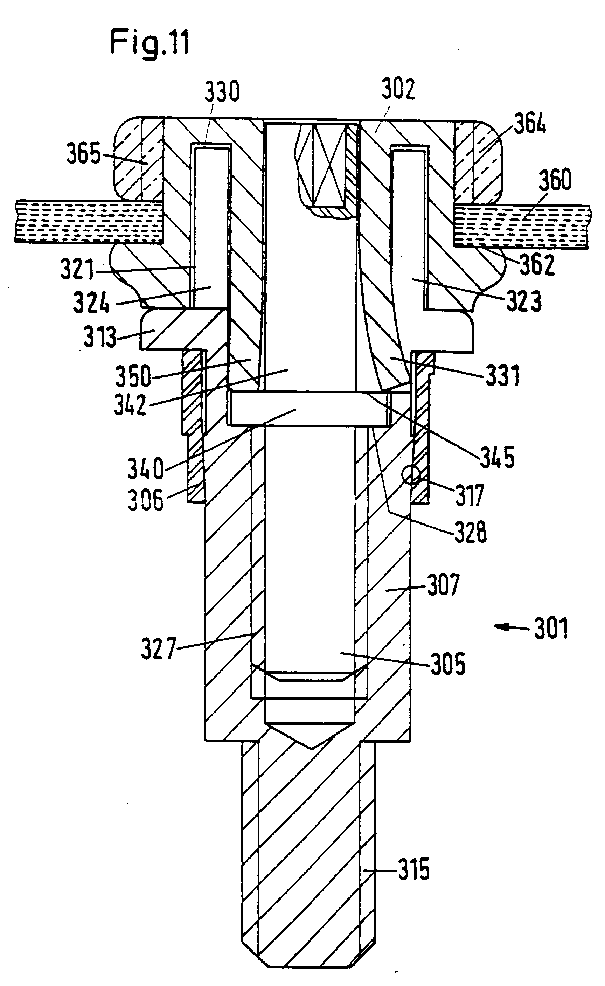

- Fig. 11: zeigt einen Längsschnitt einer vierten Ausführungsform eines erfindungsgemäßen Einsatzes mit einem zweiteiligen Zwischenstück.

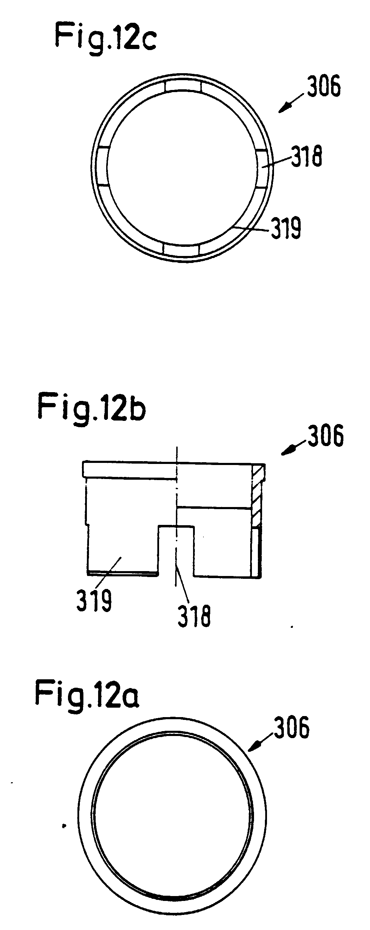

- Fig. 12a: zeigt eine Draufsicht eines bei der vierten Ausführungsform verwendeten Klemmrings,
- Fig. 12b: zeigt eine teilweise geschnittene Seitenansicht des Klemmrings gemäß Fig. 12a,
- Fig. 12c: zeigt eine Ansicht des Klemmrings gemäß Fig. 12a von unten.

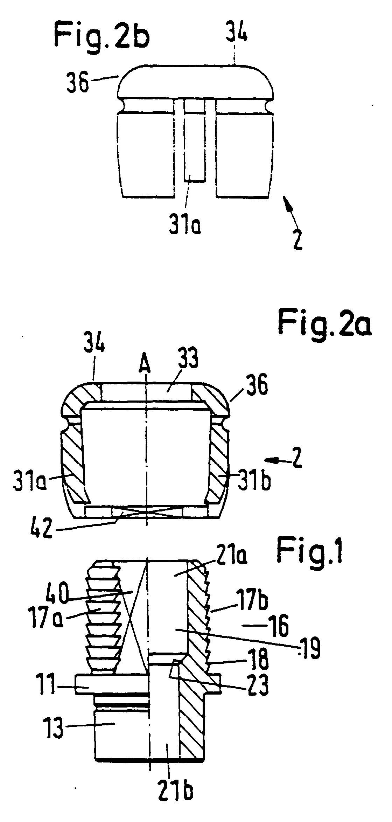

Gemäß einem ersten Ausführungsbeispiel, das in den Fig. 1 bis 4 dargestellt ist, umfaßt der erfindungsgemäße Einsatz ein Zwischenstück 1 und eine Kappe 2. Das Zwischenstück 1 ist zum Einsetzen in einen Implantat-Grundkörper (nicht dargestellt) vorgesehen und weist eine Schulter 11 zum Aufliegen auf dem zervikalen Rand des Grundkörpers sowie einen daran in zervikaler Richtung anschließenden Formschlußabschnitt 13 auf. In dem Formschlußbereich 13 sind zur Sicherung des Zwischenstücks gegen eine Verdrehung gegenüber dem Grundkörper (nicht dargestellte) Formschlußelemente vorgesehen, welche zum Eingreifen in komplementäre Formschlußelemente des Implantat-Grundkörpers vorgesehen sind. Hierfür kann im wesentlichen jedes Formschlußelement bzw. jede Formschlußverbindung verwendet werden, die für die Verbindung von Grundkörper und Aufbau (Abutment) bei enossalen Implantaten, insbesondere Zahnimplantaten, bekannt ist, z. B. eine Verbindung wie in DE 40 28 855 C2 beschrieben, eine imbusartige Verbindung, bei welcher der Abschnitt 13 in Mehrkantform ausgebildet ist und dgl. Alternativ kann ggf. auch eine nicht formschlüssige Verdrehsicherung gegenüber dem Grundkörper vorgesehen sein.

Auf der koronalen Seite der Schulter 11 besitzt das Zwischenstück 1 einen im wesentlichen zylinderförmigen Rastbereich 16, der zwei einander diametral gegenüberliegende Reihen von Rastzacken aufweist, wobei diese Rastzackenreihen mit 17a bzw. 17b bezeichnet sind und die Zacken selbst mit der Bezugsziffer 18 bezeichnet sind.

Das Zwischenstück 1 weist eine durchgängige Bohrung 19 auf, welche am koronalen Ende einen Bereich 21a mit einem größeren Durchmesser und an dem zervikalen Ende einen Bereich 21b mit einem kleineren Durchmesser aufweist, wobei zwischen diesen beiden Bereichen eine Schulter 23 zum Abstützen des Kopfes einer Befestigungsschraube (nicht dargestellt) zum Befestigen des Zwischenstücks in dem Implantat-Grundkörper vorgesehen ist.

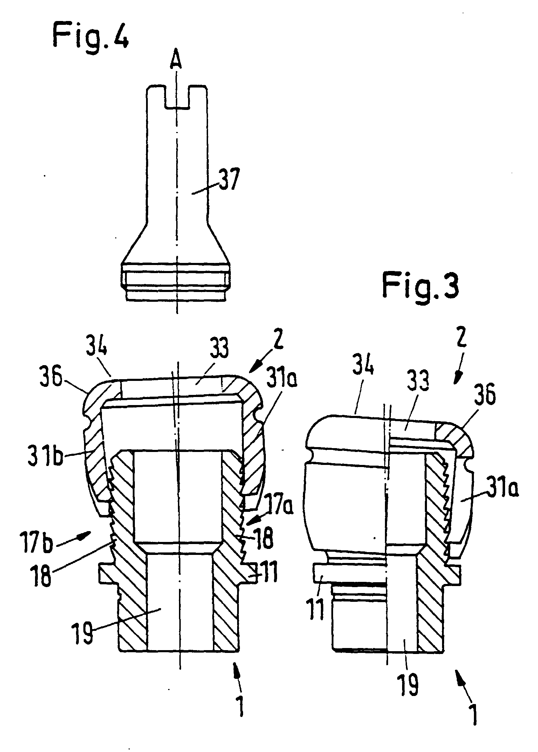

Die zugehörige Kappe 2 hat eine im wesentlichen rotationssymmetrische Form. Sie weist an ihren Seitenflachen zwei elastische Rastzungen 31a und 31b zum Eingreifen in die entsprechenden Rastzackenreihen 17a und 17b (vgl. Fig. 3 und 4) auf, deren Lage bezüglich der Umfangsrichtung derjenigen der Rastzackenreihen 17a und 17b des Zwischenstücks entspricht. Die Kappe 2 kann an ihrem koronalen Ende eine geschlossene Decke aufweisen oder, wie in Fig. 2a dargestellt, mit einer Öffnung 33 sowie einer senkrecht zu der Längsachse liegenden Auflageflache 34 für Gingivagewebe versehen sein, welche mit einem Schraubgewinde zum Ansetzen eines Betätigungswerkzeuges 37 versehen sein kann.

Das Zwischenstück 1 besitzt in dem Rastbereich 16 eine oder mehrere ebene Außenflächen 40, während die Kappe eine oder mehrere ebene Innenflachen 42 aufweist. Die Lage der ebenen Außenflächen 40 relativ zueinander und zu den Rastzackenreihen 17a, 17b entspricht derjenigen der ebenen Innenflächen 42 zueinander bzw. zu den Rastzungen 31a, 31b, so daß die ebenen Innenflächen 42 im montierten Zustand mit den ebenen Außenflächen 40 ausgerichtet sind und mit diesen zusammen eine Verdrehung der Kappe 2 gegenüber dem Zwischenstück 1 verhindern.

Die Fig. 3 und 4 zeigen das Zwischenstück 1 mit der daran montierten Kappe 2. Wie man anhand dieser Figuren erkennt, greifen die Rastzungen 31a und 31b in die jeweiligen Rastzackenreihen 17a bzw. 17b des Zwischenstücks ein, wobei die Flanken der Rastzacken 18 in bekannter Weise so ausgestaltet sind, daß eine Bewegung der Kappe 2 in Richtung zu dem zervikalen Ende durch eine im wesentlichen senkrecht zu der Längsachse des Zwischenstücks 1 verlaufende Flanke blockiert wird und in entgegengesetzter Richtung eine Bewegung beim Aufbringen einer relativ geringen Zugkraft möglich ist, so daß eine Vorzugsrichtung zu dem koronalen Ende des Zwischenstücks 1 hin gegeben ist. Durch die einander gegenüberstehenden Flächen 40 und 42 wird gleichzeitig eine Drehung der Kappe 2 relativ zu dem Zwischenstück 1 vermieden.

Eine kontrollierte Aufwärtsbewegung, etwa aus der in der Fig. 3 dargestellten Position zu der in der Fig. 4 dargestellten Position der Kappe 2, ist dadurch möglich, daß die Kappe an ihrem koronalen Ende, also im Bereich der Kanten 36, auf einer Seite, beispielsweise auf der Seite der Rastzunge 31a, in Richtung zu der Längsachse A des Zwischenstücks 1 gedrückt wird, wodurch sich die Rastzunge 31a löst und um eine Rastzacke 18 in koronaler Richtung versetzt wieder einrastet, wobei die Kappe eine Kippbewegung um einen Winkel von ungefähr 3° bis 5° ausführt. Durch Andrücken der Kappe 2 auf der gegenüberliegenden Seite, also der Seite der Rastzunge 31b, läßt sich dieser Vorgang nun von der anderen Seite her wiederholen, so daß eine Kippbewegung in die umgekehrte Richtung erfolgt. Bei einer Abfolge von mehreren solcher alternierenden Kippbewegungen "klettert" dann die Kappe 2 entlang der Rastflächen 17a und 17b zu dem koronalen Ende des Zwischenstücks 1 hin.

Der in den Fig. 1 bis 4 dargestellte Einsatz wird wie folgt verwendet. Zunächst wird in bekannter Weise ein Implantat-Grundkörper herkömmlicher Bauart in einen Kieferknochen eingesetzt. In den Grundkörper wird dann das Zwischenstück 1 eingesetzt und in bekannter Weise durch eine Befestigungsschraube (nicht dargestellt) gesichert, wobei die Formschlußelemente des Zwischenstücks 1, welche in komplementäre Formschlußelemente des Grundkörpers eingreifen, eine Verdrehsicherung bewirken. Vorzugsweise ist dabei die Kappe 2 bereits auf das Zwischenstück 1 aufgesetzt, wobei die Rastzacken 31a und 31b in Rastzacken nahe der Schulter 11 eingreifen, wie dies in Fig. 3 dargestellt ist, so daß die Auflagefläche 34 nur knapp oberhalb des koronalen Randes des Zwischenstücks 1 liegt. Falls die Rastzacken 18 so ausgebildet sind, daß eine Bewegung der Kappe zu dem zervikalen Ende des Zwischenstücks hin unter Einsatz einer größeren Kraft als für die umgekehrte Bewegung möglich ist, kann die Kappe 2 auch nach dem Einsetzen und Befestigen des Zwischenstücks aufgesetzt werden. Die Gingiva wird nun in bekannter Weise vernäht, so daß sie an den Seiten des Einsatzes und insbesondere auch auf der Auflagefläche 34 an der Oberseite der Kappe 2 aufliegt.

Nach dem Verheilen der Gingiva wird nun durch einen seitlichen Druck auf das koronale Ende der Kappe 2 wie vorangehend beschrieben die Kappe 2 gegenüber der Längsachse des Zwischenstücks 1 verkippt, so daß die auf dieser Seite befindliche Rastzunge in der in koronaler Richtung nächsten Rastzacke einrastet. Dieser Vorgang wird ggf. für die andere Seite wiederholt. Durch einen wechselseitigen Druck auf die einander gegenüberliegenden Seiten der Kappe wird dieser Vorgang so oft wiederholt, bis im Ergebnis die Kappe 2 in Längsrichtung des Zwischenstücks um einen gewünschten Betrag zum koronalen Ende des Zwischenstücks 1 verschoben ist. Dadurch wird eine Zugspannung in der Gingiva erzeugt, welche die Kappe 2 und insbesondere die Auflagefläche 34 bedeckt. Die Gingiva wird so zu einem Wachstum angeregt, so daß sich das Gingivavolumen an der Implantationsstelle vergrößert. Der Vorgang des Verschiebens der Kappe 2 und des Erzeugens einer Spannung in der Gingiva kann mehrere Male wiederholt werden, bis das gewünschte oder maximal erreichbare Gingivavolumen erreicht ist. Danach wird der Einsatz entfernt und in den Implantat-Grundkörper ein entsprechendes Aufbauelement zum Tragen eines Zahnersatzes eingesetzt, der dann in der üblichen Weise aufgebracht wird.

Alternativ hierzu kann nach dem Verheilen der Gingiva diese begrenzt geöffnet werden und ein Betätigungswerkzeug 37 in die Öffnung 33 eingeschraubt werden, welches im wesentlichen einen Hebel darstellt, mit dem die vorangehend erwähnten Kippbewegungen erzeugt werden können (vgl. Fig. 4). Statt mit einer Schraubverbindung kann das Betätigungswerkzeug auch in einer anderen geeigneten Weise, beispielsweise durch eine Klemm- oder Bajonettverbindung, mit der Kappe 2 verbunden werden, sofern gewährleistet ist, daß eine Kippbewegung der Kappe 2 in kontrollierter Weise erzeugt werden kann.

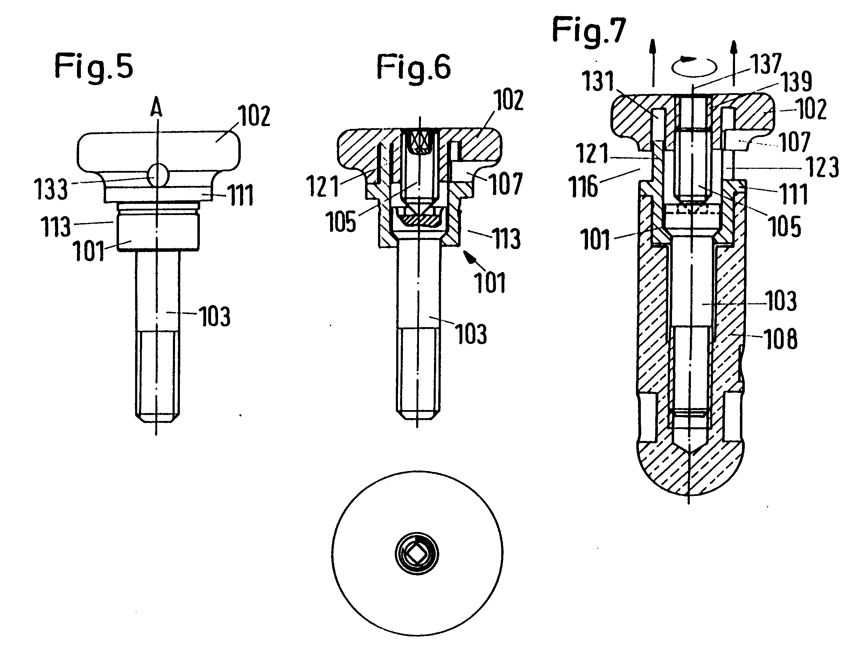

Die Fig. 5 bis 7 zeigen ein zweites Ausführungsbeispiel der Erfindung. Bei diesem Ausführungsbeispiel umfaßt der Einsatz ein Zwischenstück 101, eine Kappe 102, ein Stützelement, das hier durch die Befestigungsschraube 103 gebildet wird, eine Verstellschraube 105 und ein Sicherungselement 107.

Das Zwischenstück ist hinsichtlich der Verankerung in dem Grundkörper, der in Fig. 7 mit dem Bezugszeichen 108 bezeichnet ist, wie in dem ersten Ausführungsbeispiel ausgestaltet, d.h. es weist eine Schulter 111 zum Aufliegen auf dem koronalen Rand des Grundkörpers 108 sowie einen Formschlußabschnitt 113 mit (nicht dargestellten) Formschlußelementen auf, welche in komplementäre Elemente in den Grundkörper 108 eingreifen. Das Zwischenstück 101 unterscheidet sich von dem ersten Ausführungsbeispiel in der Gestaltung des Verbindungsabschnitts 116, der sich in koronaler Richtung an die Schulter 111 anschließt. In diesem Bereich besitzt das Zwischenstück 101 eine im wesentlichen glatte Außenwand 121, in welcher ein in Längsrichtung des Zwischenstücks 101 verlaufender Schlitz 123 ausgebildet ist. Die Kappe 102 ist mit einer Ringnut 131 versehen, in welche die Außenwand 121 des Zwischenstücks 101 eingreift, so daß die Kappe 102 die Wand 101 übergreift und sich teilweise in das Innere des Zwischenstücks 101 erstreckt und so gegen das Zwischenstück 101 in dessen Längsrichtung verschiebbar ist.

Zur Verdrehsicherung ist ein Formschlußelement 107 durch eine entsprechende Bohrung 133 (vgl. Fig. 5) der Kappe in den Schlitz 123 eingeführt, wobei das Außenprofil des Formschlußelements 107, wie aus Fig. 6 und 7 ersichtlich ist, an das Außenprofil der Kappe angepaßt ist, so daß die Gingiva allseitig gleichförmig anliegen bzw. einwachsen kann.

In der Kappe 102 ist eine zentrale, in Längsrichtung verlaufende Bohrung 137 vorgesehen, welche ein Innengewinde 139 aufweist. In die Bohrung 137 ist die Verstellschraube 105 eingeschraubt, die so bemessen ist, daß sie sich im montierten Zustand (vgl. Fig. 7) auf der Befestigungsschraube 103 abstützen kann und gegenüber dieser drehbeweglich ist. Durch Drehen der Schraube 105 kann nun die Kappe 102 linear in Längsrichtung von dem zervikalem Ende des Zwischenstücks 101 weg bzw. zu diesem hin verschoben werden, wobei das Formschlußelement 107 gewährleistet, daß keine Drehbewegung der Kappe 102 relativ zu dem Zwischenstück 101 stattfindet.

In der Anwendung wird wie bei dem ersten Ausführungsbeispiel der Grundkörper 108 in den Knochen eingesetzt und anschließend in den Grundkörper 108 das Zwischenstück 101 eingeführt und mit der Schraube 103 gesichert. Die Kappe 102 mit dem Formschlußelement 107 kann vor dem Einsetzen in den Grundkörper (wobei dann die Schraube 105 zum Festziehen der Schraube 103 entfernt werden muß) oder nach dem Festziehen der Schraube 103 aufgesetzt und über das Formschlußelement 107 und den Schlitz 123 gegen eine Verdrehung gesichert werden. Die Kappe 102 ist nun über die Außenwand 121 des Zwischenstücks 101 und die Nut 131 in Längsrichtung des Zwischenstücks geführt. Die Schraube 105 wird nun soweit eingedreht, bis sie auf der Befestigungsschraube 103 aufsitzt. Danach wird die Gingiva derart vernäht, daß sie insbesondere auch die Oberseite der Kappe 102 überdeckt. Nach dem Verheilen der Gingiva wird diese soweit geöffnet, daß die Bohrung 137 und die Einstellschraube 105 zugänglich werden. Durch eine Betätigung der Schraube 105 wird nun die Kappe 102 nach oben gedrückt (vgl. Fig. 7), so daß in dem Gingivagewebe eine wachstumsfördernde Spannung erzeugt wird, die zu einer Vergrößerung des Gingivavolumens führt. Dabei blockiert das in das Außengewinde der Schraube eingreifende Innengewinde 139 eine Bewegung der Kappe zu dem zervikalen Ende des Zwischenstücks hin. Dieser Vorgang wird gegebenenfalls so oft wiederholt, bis das gewünschte Gingivavolumen erreicht ist.

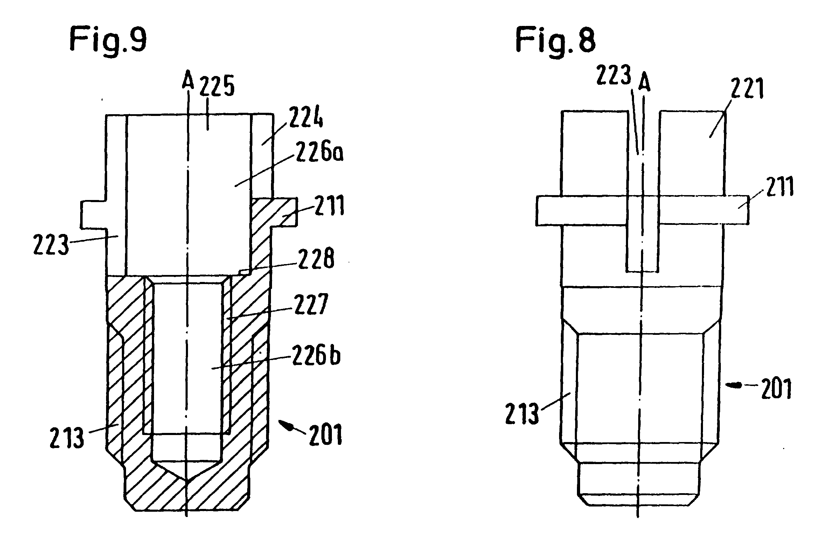

Ein drittes Ausführungsbeispiel des erfindungsgemäßen Einsatzes ist in den Fig. 8 bis 10 dargestellt. Bei der dargestellten Ausführungsform ist der Einsatz aus einem Zwischenstück 201, einer Kappe 202 und einer Einstellschraube 205 aufgebaut. Das Zwischenstück 201 weist wieder eine Schulter 211 zum Abstützen auf dem zervikalen Rand des Grundkörpers auf, wobei bei dem dargestellten Zwischenstück 201 eine Schraubverbindung mit dem Implantat-Grundkörper über ein Außengewinde 213 des Zwischenstücks vorgesehen ist. Dementsprechend entfallen gegenüber den vorangehend beschriebenen Ausführungsbeispielen der Formschlußabschnitt und die Befestigungsschraube zum Befestigen des Einsatzes in dem Grundkörper. Wie in dem zweiten Ausführungsbeispiel weist das Zwischenstück 201 im Bereich oberhalb der Schulter 211 einen Verbindungsabschnitt 216 mit einer im wesentlichen glatten Seitenwand 221 auf, in der ein in Längsrichtung verlaufender Schlitz 223 ausgebildet ist, der sich bei der dargestellten Ausführungsform in zervikaler Richtung über die Schulter 211 hinaus erstreckt, aber auch kürzer ausgebildet sein kann. In dem Verbindungsabschnitt ist weiterhin ein dem Schlitz 223 diametral gegenüberliegender Schlitz 224 für einen Schraubendreher vorgesehen.

Das Zwischenstück 201 weist in seinem Inneren eine Bohrung 225 auf, welche einen sich bis zu dem koronalen Ende erstreckenden Abschnitt 226a mit einem größeren Durchmesser und einen daran in zervikaler Richtung anschließenden Abschnitt 226b mit einem kleineren Durchmesser aufweist, wobei der Abschnitt 226b mit einem Innengewinde 227 versehen ist und zwischen den Abschnitten 226a und 226b ein Vorsprung 228 ausgebildet ist. Die Kappe 202 weist eine Ringnut 230 auf, welche die Seitenwand 221 des Zwischenstücks 201 übergreift. An der Innenseite der Nut 230 ist eine elastische Haltelasche 231 vorgesehen, deren Breite derjenigen des Schlitzes 223 entspricht und welche radial nach außen gebogen ist. Wenn die Kappe 202 auf den Einsatz 201 aufgesetzt wird, bewirkt die Haltelasche 231, sobald diese mit dem Schlitz 223 zur Deckung kommt, eine Verdrehsicherung der Kappe gegenüber dem Zwischenstück 201.

Die Einstellschraube 205 weist ein dem Innengewinde 227 entsprechendes Außengewinde auf und besitzt einen ringförmigen Vorsprung 240, welcher bei vollständig eingedrehter Schraube 205, bezogen auf die Richtung zu dem koronalen Ende des Zwischenstücks 201 hin, vor dem zervikalen Ende des Schlitzes 223, vorzugsweise auf dem Vorsprung 228 zwischen den beiden Bohrungsabschnitten 226a und 226b zu liegen kommt, bzw. in eine Position, wiederum bezogen auf die Richtung zum koronalen Ende des Zwischenstücks 201 hin, vor der Kappe 202 gebracht werden kann, so daß das zervikale Ende des Schlitzes 223 bzw. das zervikale Ende des sich in die Bohrung 225 erstreckenden Teils der Kappe 202 zwischen dem Vorsprung 240 und dem koronalen Ende des Zwischenstücks 201 liegt. Aus einer solchen Position kann dann durch eine Betätigung der Schraube 205 der Vorsprung 240 mit dem unteren Rand des sich in das Innere des Zwischenstücks 201 erstreckenden Teils der Kappe 202 in Anschlag gebracht werden, so daß bei einer weiteren Betätigung der Schraube in dieselbe Richtung die Kappe 202 in die Richtung zu dem koronalen Ende des Zwischenstücks 201 verschoben wird.

Im einfachsten Fall kann der Vorsprung 240 ein Schraubenkopf sein; der besseren Handhabung wegen kann jedoch auch vorgesehen sein, daß sich oberhalb des Vorsprungs 240 ein Schaft 242 erstreckt, der eine Mehrkantausnehmung zur Betätigung der Schraube 205 aufweist.

Der Einsatz gemäß dem vorangehend beschriebenen dritten Ausführungsbeispiel der Erfindung wird wie für das zweite Ausführungsbeispiel beschrieben verwendet, d.h. der Einsatz wird nach der Implantation des Grundkörpers eingesetzt und nach dem Verheilen der Gingiva wird, nach einer Öffnung derselben im Bereich der Schraube 205, durch Betätigen der Schraube 205 die Kappe 202 in Längsrichtung des Zwischenstücks 201 derart verschoben, daß die gewünschte wachstumsfördernde Spannung in dem Gingivagewebe entsteht.

Bei dem vorangehend beschriebenen Ausführungsbeispiel gewährleistet das Außengewinde 213, wenn es fest genug in das entsprechende Innengewinde des Implantat-Grundkörpers eingedreht ist, eine ausreichende Verdrehsicherung des Zwischenstücks 201 und damit der Kappe 202 gegenüber dem Grundkörper. Grundsätzlich kann jedoch auch bei der Ausführungsform gemäß dem dritten Ausführungsbeispiel das Zwischenstück analog zu dem ersten und zweiten Ausführungsbeispiel, d.h. mit Formschlußelementen und einer Führung für eine durch das Zwischenstück 201 hindurchgeführte Befestigungsschraube zum Fixieren des Zwischenstücks in dem Grundkörper ausgebildet sein. Umgekehrt kann gegebenenfalls eine Schraubverbindung des Zwischenstücks mit dem Implantat-Grundkörper bei den Ausführungsformen gemäß den anderen Ausführungsbeispielen vorgesehen sein. Ebenso können andere Verbindungstypen verwendet werden, wie sie für die Verbindung von Implantat-Grundkörpern mit Aufbauelementen bekannt sind.

Während bei den vorangehend beschriebenen Ausführungsformen das Zwischenstück jeweils einstückig ausgebildet war, kann das Zwischenstück erfindungsgemäß auch aus mehreren Elementen bestehen. Eine mögliche Realisierung einer derartigen mehrteiligen Ausführung wird nachfolgend mit Bezug auf die Figuren 11 und 12 als viertes Ausführungsbeispiel beschrieben.

Gemäß dem vierten Ausführungsbeispiel ist, ähnlich wie bei dem dritten Ausführungsbeispiel, der erfindungsgemäße Einsatz aus einem Zwischenstück 301, einer Kappe 302 und einer Einstellschraube 305 aufgebaut, wobei nun allerdings das Zwischenstück 301 aus einem Klemmring 306 und einem Basiselement 307 besteht. Der Klemmring 306 wird in eine Bohrung des Implantat-Grundkörpers eingesetzt und durch geeignete Mittel, auf die nachfolgend noch eingegangen wird, an einer vorgesehenen Stelle in der Bohrung des Implantat - Grundkörpers gehalten. Er weist einen sich konisch zu seinem zervikalen Ende hin verjüngenden Innendurchmesser sowie eine Einrichtung zum kraftschlüssigen Verhindern einer Drehbewegung relativ zu dem Implantat - Grundkörper auf.

Das Basiselement 307 weist eine Schulter 313 zum Aufliegen auf dem koronalen Rand des Implantat-Grundkörpers im eingesetzten Zustand sowie ein Außengewinde 315 an seinem zervikalen Ende zum Eingreifen in ein korrespondierendes Innengewinde des Implantat-Grundkörpers auf, ähnlich wie dies bei der mit Bezug auf die Figuren 8 bis 10 beschriebenen dritten Ausführungsform der Fall war. Zusätzlich weist das Basiselement 307 einen konischen Abschnitt 317 unterhalb der Schulter 313 auf, in dem sich sein Außendurchmesser zum zervikalen Ende hin verkleinert, wobei der maximale Außendurchmesser des Abschnitts 317 größer als der minimale Innendurchmesser des Klemmrings 307 ist. Die Lage dieses konischen Abschnitts 317 bezüglich der Schulter 313 entspricht ungefähr der Lage des Klemmrings 306 bezüglich des koronalen Randes des Implantat-Grundkörpers (nicht dargestellt) im eingesetzten Zustand, so daß dann, wenn das Basiselement 306 mit dem Außengewinde 315 in den Implantat-Grundkörper eingeschraubt wird, der konische Bereich 317 konzentrisch im Bereich des Klemmrings 306 zu liegen kommt. Der Außendurchmesser in dem Abschnitt 317 ist dabei so bemessen, daß sich beim Einschrauben des Basiselements 307 der konusartige Abschnitt 317 in dem Klemmring 306 verklemmt und damit eine kraftschlüssige Verdrehsicherung des Basiselements 307 gegenüber dem Klemmring 306 erzeugt.

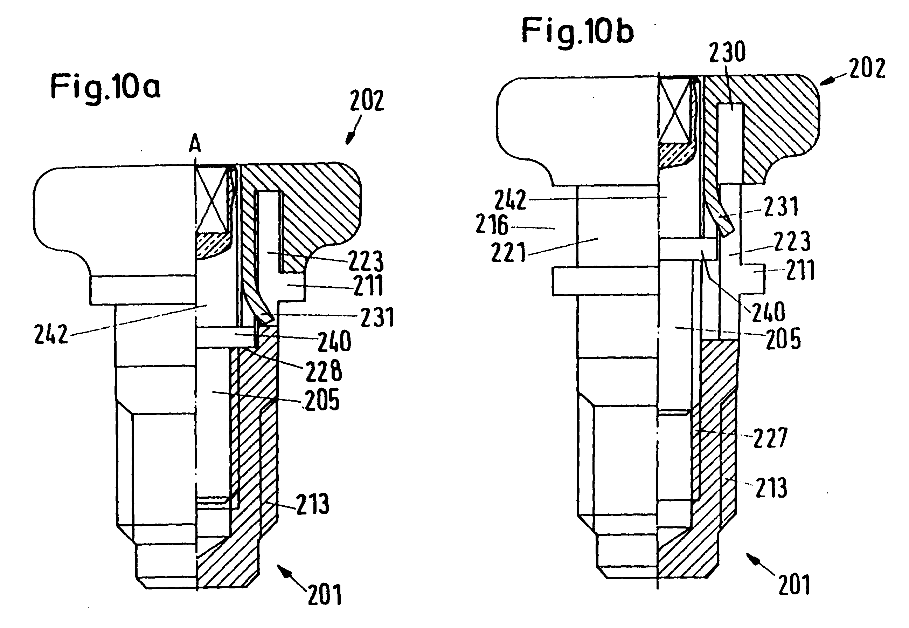

Der Klemmring 306 ist, wie in Fig. 12a bis 12c gezeigt, mit Schlitzen 318 versehen, so daß mehrere Klemmzungen 319 gebildet werden, welche beim Eindrehen des Basiselements 307 nach außen gedrückt werden. Dabei sind der konische Abschnitt 317 und die Klemmzungen 319 so ausgebildet, daß die Klemmzungen 319 beim Eindrehen des Basiselements 307 in das Innengewinde des Implantat-Grundkörpers durch den konischen Abschnitt 317 nach Art eines Dübels gegen die Innenwand der Bohrung des Implantat-Grundkörpers gedrückt werden, so daß eine kraftschlüssige Verdrehsicherung über die Klemmzungen 319 erzeugt wird. Auf diese Weise kann eine bessere Verdrehsicherung des Zwischenstücks gegenüber dem Implantat-Grundkörper als bei der dritten Ausführungsform (vgl. Fig. 10a und 10b) erreicht werden.

Die Klemmzungen 319 können radial nach außen vorgebogen sein, so daß beim Einsetzen des Klemmrings 306 in den Implantat-Grundkörper die Klemmzungen sich in der Innenbohrung des Implantat-Grundkörpers verklemmen und somit den Klemmring 306 fixieren. Alternativ oder ergänzend kann der Implantat-Grundkörper einen Vorsprung aufweisen, auf welchem der Klemmring nach dem Einsetzen in die Bohrung des Implantat-Grundkörpers aufsitzt. Grundsätzlich kann auch auf die Klemmzungen verzichtet werden. In diesem Fall weist der Klemmring eine im wesentlichen konische Form auf, wobei sein maximaler Außendurchmesser größer als der Durchmesser der Bohrung in dem Implantat-Grundkörper ist, in die er eingesetzt wird.

Ansonsten ist der Einsatz gemäß diesem vierten Ausführungsbeispiel ähnlich dem Einsatz gemäß dem dritten Ausführungsbeispiel aufgebaut. Wie bei dem dritten Ausführungsbeispiel weist das Zwischenstück 301, genauer das Basiselement 306, in dem Bereich oberhalb der Schulter 313 einen Verbindungsabschnitt mit einer im wesentlichen glatten Seitenwand 321, in der ein in Längsrichtung verlaufender Schlitz 323 ausgebildet ist, dem ein weiterer Schlitz 324 diametral gegenüberliegt, sowie eine Bohrung mit einem Innengewinde 327 und einem Vorsprung 328 auf.

Die Kappe 302 weist in Übereinstimmung mit dem dritten Ausführungsbeispiel eine Ringnut 330 und eine Haltelasche 331 auf, welche in den Schlitz 323 eingreift. Die Einstellschraube 305 entspricht derjenigen des dritten Ausführungsbeispiels und weist einen ringförmigen Vorsprung 340 sowie einen Schaft 342 auf, wobei der Vorsprung 340 durch Drehen der Schraube 305 in Anschlag mit dem zervikalen Rand 345 der Kappe 302 gebracht werden kann. Die Kappe 302, der Vorsprung 340, die Haltelasche 331 und der Schlitz 323 wirken wie bei dem dritten Ausführungsbeispiel zusammen.

Bei der in Fig. 11 dargestellten Ausführungsform ist zusätzlich eine zweite, nach außen gebogene Haltelasche 350 vorhanden, deren Länge größer als die Länge des zweiten Schlitzes 324 ist, so daß sie gegen die Innenseite der Bohrung des Basiselementes 307 drückt, wenn die Kappe 302 sich in der tiefsten Stellung befindet. Die Kappe 302 wird dadurch in dieser Stellung gegen eine Bewegung in Längsrichtung gesichert, so daß verhindert wird, daß sich die Kappe 302 beim Einsetzen des erfindungsgemäßen Einsatzes in den Implantat-Grundkörper von dem Zwischenstück 301 löst. Die Klemmkraft der Lasche 350 ist dabei so bemessen, daß zwar ein Herausfallen der Kappe 302 aus dem Basiselement 307 beim Einsetzen vermieden wird, aber ohne weiteres eine kontrollierte Bewegung der Kappe zum koronalen Ende des Basiselements 307 hin mit Hilfe der Einstellschraube 305 herbeigeführt werden kann.

In einer vorteilhaften, nicht dargestellten Abwandlung ist die Haltelasche 350 nicht nach außen, sondern nach innen gekrümmt, so daß sie gegen den Schaft 342 der Einstellschraube 305 drückt und dadurch die Kappe 302 gegen eine Bewegung in Längsrichtung relativ zu der Einstellschraube 305 und damit gegen ein Herausfallen beim Einsetzen sichert. Gegebenenfalls können auch mehrere derartige Haltelaschen zum Sichern der Kappe 302 gegen eine Bewegung in Längsrichtung vorgesehen sein. Selbstverständlich können derartige Klemmlaschen zur Sicherung der Kappe auch bei den anderen Ausführungsformen der Erfindung vorgesehen sein.

Fig. 11 zeigt weiterhin die vorangehend erwähnten Haftflächen 360, die z.B. aus Kollagen oder einem resorbierbaren Polymer bestehen können. Diese Haftflächen liegen auf einem Vorsprung 362 der Kappe auf und sind durch einen Klemmring 364 mit einem Gewinde 365, der auf die Kappe 302 aufgeschraubt ist, oder ein anderes geeignetes Mittel, z.B. einen Spannbügel, gesichert. Selbstverständlich können derartige Haftflächen wie in Fig. 11 gezeigt auch bei den anderen Ausführungsformen der Erfindung verwendet werden.

Beim Einsetzen des Einsatzes gemäß dem vierten Ausführungsbeispiel in den Implantat-Grundkörper wird zunächst der Klemmring 306 in den Grundkörper eingesetzt. Dieser Schritt kann auch bereits vor der Implantation des Grundkörpers erfolgen. Das Basiselement 307 wird dann in den Grundkörper eingeschraubt, wobei sich der konische Abschnitt 317 in dem Klemmring 306 verspannt. Ansonsten wird wie vorangehend mit Bezug auf das dritte Ausführungsbeispiel vorgegangen.

Wie bereits verschiedentlich erwähnt, können Elemente der verschiedenen Ausführungsformen durchaus kombiniert werden. Beispielsweise kann eine Rastverbindung zwischen der Kappe und dem Zwischenstück einer Ausführungsform verwendet werden, bei welcher die Kappe durch Betätigen einer Schraube verschoben wird. Ebenso können die mit Bezug auf einzelne Ausführungsbeispiele beschriebenen Sicherungsmechanismen auch bei anderen Ausführungsformen verwendet werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 1: Zwischenstück
- 2: Kappe
- 11: Schulter des Zwischenstücks
- 13: Formschlußabschnitt des Zwischenstücks
- 16: Rastbereich
- 17a, 17b: Rastzackenreihe
- 18: Rastzacke
- 19: Bohrung des Zwischenstücks
- 21a: koronales Ende der Bohrung
- 21b: zervikales Ende der Bohrung
- 23: Schulter
- 31a, 31b: Rastzungen
- 33: Öffnung der Kappe
- 34: Auflagefläche
- 36: Kante der Kappe
- 37: Betätigungswerkzeug
- 40: ebene Außenfläche
- 42: ebene Innenfläche
- 101: Zwischenstück
- 102: Kappe
- 103: Befestigungsschraube
- 105: Verstellschraube
- 107: Sicherungselement
- 108: Grundkörper
- 111: Schulter
- 113: Formschlußabschnitt
- 116: Verbindungsabschnitt
- 121: Außenwand des Zwischenstücks
- 123: Schlitz
- 131: Ringnut
- 133: Bohrung der Kappe
- 137: Bohrung
- 139: Innengewinde
- 201: Zwischenstück
- 202: Kappe
- 205: Einstellschraube
- 211: Schulter
- 213: Außengewinde
- 216: Verbindungsabschnitt
- 221: Seitenwand
- 223: Schlitz
- 224: Schlitz
- 225: Bohrung
- 226a, 226b: Bohrungsabschnitte
- 227: Innengewinde
- 228: Vorsprung
- 230: Ringnut
- 231: Haltelasche
- 240: Vorsprung der Schraube
- 242: Schraubenschaft
- 301: Zwischenstück
- 302: Kappe
- 305: Einstellschraube
- 306: Klemmring
- 307: Basiselement
- 313: Schulter
- 315: Außengewinde
- 317: konischer Abschnitt des Basiselements
- 318: Schlitz
- 319: Klemmzunge
- 321: Seitenwand
- 323: Schlitz
- 324: Schlitz
- 327: Innengewinde
- 328: Vorsprung
- 330: Ringnut
- 331: Haltelasche
- 340: Vorsprung der Schraube
- 342: Schraubenschaft
- 345: zervikaler Rand der Kappe
- 350: Haltelasche
- 360: Haftfläche
- 362: Vorsprung der Kappe
- 364: Sicherungsring
- 365: Gewinde
- A: Längsachse

## Patentansprüche

1. Einsatz für ein enossales Implantat zum Fördern des Wachstums der Gingiva nach dem Einsetzen eines Implantat-Grundkörpers, welcher ein Zwischenstück (1; 101; 201; 306, 307) mit einem zervikalen Ende zum Einsetzen in den Grundkörper, eine Kappe (2; 102; 202; 302) am koronalen Ende des Zwischenstücks, eine Einrichtung (17, 31; 105, 139; 205; 305) zum Verhindern einer Relativbewegung der Kappe (2; 102; 202; 302) in Richtung zu dem zervikalen Ende des Zwischenstücks (1; 101; 201; 306, 307) hin bei Einwirkung einer im wesentlichen in Längsrichtung des Zwischenstücks wirkenden Kraft auf die Kappe sowie eine Verdrehsicherung (17, 31; 107, 123; 223, 231; 323, 331) zum Verhindern einer Drehbewegung der Kappe um die Längsachse des Zwischenstücks relativ zu demselben aufweist, wobei die Kappe (2; 102; 202; 302) so angeordnet ist, daß sie relativ zu dem Zwischenstück (1; 101; 201; 306, 307) in Längsrichtung (A) desselben zumindest in der Richtung zu dem koronalen Ende des Zwischenstücks hin bewegt werden kann und die Verdrehsicherung (17, 31; 107, 123; 223, 231; 323, 331) bei einer solchen Bewegung eine Drehbewegung der Kappe (2; 102; 202; 302) relativ zu dem Zwischenstück (1; 101; 201; 306, 307) um dessen Längsachse (A) verhindert.

2. Einsatz nach Anspruch 1, **gekennzeichnet** durch eine Einrichtung zum Befestigen eines Betätigungswerkzeuges (37) an dem zervikalen Ende der Kappe.

3. Einsatz nach Anspruch 1 oder 2, dadurch **gekennzeichnet**, daß die Kappe (2) mit dem Zwischenstück über eine Rastverbindung (17, 31) verbunden ist, wobei Rastzungen (31a, 31b) des einen Teils in Rastzacken (18) des anderen Teils eingreifen, welche in einer im wesentlichen in Längsrichtung des Zwischenstücks verlaufenden Reihe (17a, 17b) angeordnet sind.

4. Einsatz nach Anspruch 3, dadurch **gekennzeichnet**, daß an der Kappe (2) oder an dem Zwischenstück (1) zwei einander diametral gegenüberliegende, im wesentlichen in Längsrichtung des Zwischenstücks (1) verlaufende Reihen von Rastzacken (17a, 17b) vorgesehen sind.

5. Einsatz nach Anspruch 3 oder 4, **gekennzeichnet** durch einen am zervikalen Ende der Kappe lösbar angebrachten Hebel (37) zum Erzeugen einer Kippbewegung der Kappe relativ zu dem Zwischenstück um eine Achse im wesentlichen senkrecht zu der Längsachse des Zwischenstücks.

6. Einsatz nach einem der Ansprüche 1 bis 5, dadurch **gekennzeichnet**, daß eine Schraube (105; 205; 305) die Kappe (102; 202; 302) und/oder das Zwischenstück (101; 201; 306, 307) zumindest teilweise durchsetzt, wobei die Kappe zum Abstützen an der Schraube und die Schraube zum Abstützen an dem Zwischenstück eingerichtet ist.

7. Einsatz nach Anspruch 6, dadurch **gekennzeichnet**, daß die Schraube (205; 305) in ein Innengewinde (227; 327) des Zwischenstücks (201; 306, 307) eingreift und eine Anschlagfläche (240; 340) aufweist, welche durch Betätigen der Schraube in Anschlag mit dem zervikalen Ende eines sich in das Innere des Zwischenstücks (201; 306, 307) hinein erstreckenden Teils der Kappe (202; 302) gebracht werden kann.

8. Einsatz nach Anspruch 6, dadurch **gekennzeichnet**, daß die Schraube (105) mit einem Innengewinde (139) der Kappe (102) verbunden ist und an einem in dem Innenraum des Zwischenstücks (101) befindlichen Anschlagelement (103) abgestützt werden kann.

9. Einsatz nach einem der Ansprüche 1 bis 8, dadurch **gekennzeichnet**, daß die Kappe (102; 202; 302) mit dem Zwischenstück (101; 201; 306, 307) über eine lineare Führung (107, 123; 223, 231; 323, 331) verbunden ist, welche eine lineare Relativbewegung im wesentlichen in Längsrichtung (A) des Zwischenstücks (101; 201; 306, 307) gestattet.

10. Einsatz nach Anspruch 9, dadurch **gekennzeichnet**, daß die Führung einen in Längsrichtung (A) verlaufenden Schlitz (123; 223; 323) in der Außenwand des Zwischenstücks (101; 201; 306, 307) sowie ein mit der Kappe (102; 202; 302) verbundenes Sicherungselement (107) aufweist, welches durch den Schlitz hindurchgreift und in dem Schlitz geführt ist.

11. Einsatz nach Anspruch 9 oder 10, dadurch **gekennzeichnet**, daß die Außenwand des Zwischenstücks (201; 306, 307) einen Schlitz (223; 323) in Längsrichtung aufweist und eine sich zumindest teilweise in dem Inneren des Zwischenstücks erstreckende Zunge (231; 331) der Kappe sich in den Schlitz hinein erstreckt.

12. Einsatz nach einem der Ansprüche 1 bis 11, dadurch **gekennzeichnet**, daß die Kappe (2; 102; 202; 302) an ihrem koronalen Ende eine im wesentlichen senkrecht zur Längsachse des Zwischenstücks verlaufende Auflagefläche (34) für Gingivagewebe aufweist.

13. Einsatz nach einem der Ansprüche 1 bis 12, dadurch **gekennzeichnet**, daß an der Kappe (2; 102; 202; 302) Haftflächen (360) angebracht sind, welche über den Umfang des Zwischenstücks hinaus seitlich vorstehen und für einen Haftkontakt mit dem Gingivagewebe ausgebildet sind.

14. Einsatz nach einem der Ansprüche 1 bis 13, dadurch **gekennzeichnet**, daß die Kappe (302) eine Einrichtung (350) zum kraftschlüssigen Sichern gegen ein Lösen von dem Zwischenstück (301) beim Einsetzen des Einsatzes in den Implantat-Grundkörper aufweist.

15. Einsatz nach Anspruch 14, dadurch **gekennzeichnet**, daß die Kappe (302) eine elastische Haltelasche (350) aufweist, welche das Zwischenstück (301) oder ein damit verbundenes Element (305) beaufschlagt.

16. Einsatz nach einem der Ansprüche 1 bis 15, dadurch **gekennzeichnet**, daß das Zwischenstück (301) mit einem Sicherungsring (306) zum Einsetzen in den Implantat-Grundkörper sowie einem Basiselement (307) zum Einsetzen in den Sicherungsring und zum Aufnehmen der Kappe (302) ausgebildet ist, wobei der Sicherungsring (306) eine kraftschlüssige Einrichtung (311, 319) zum Verhindern einer Drehbewegung relativ zu dem Implantat-Grundkörper aufweist und das Basiselement (307) einen Abschnitt (317) aufweist, der zum kraftschlüssigen Sichern des Basiselements gegen eine Drehbewegung um seine Längsachse gegenüber dem Sicherungsring (306) eingerichtet ist.

17. Einsatz nach Anspruch 16, dadurch **gekennzeichnet**, daß das Basiselement (307) mit einem Außengewinde (315) zum Einschrauben in einen Implantat-Grundkörper versehen ist, der Sicherungsring (306) zumindest abschnittsweise einen sich konisch zum zervikalen Ende hin verjüngenden Innendurchmesser aufweist und das Basiselement (307) zumindest abschnittsweise einen sich konisch zum zervikalen Ende hin verjüngenden Außendurchmesser aufweist, derart, daß der Abschnitt des Basiselements mit einem sich konisch verjüngenden Außendurchmesser (317) in dem Abschnitt des Sicherungsrings (306) mit einem sich konisch verjüngenden Innendurchmesser beim Einschrauben in den Grundkörper verspannt werden kann.

18. Vorrichtung zum Fördern des Wachstums der Gingiva im Bereich der Implantationsstelle eines enossalen Implantats, welche einen Grundkörper zur Verankerung im Knochenmaterial sowie einen in dem Grundkörper angebrachten Einsatz nach einem der Ansprüche 1 bis 17 aufweist.
